# EUROPÄISCHE PATENTANMELDUNG

(11) **EP 1 431 028 A1**
(43) Veröffentlichungstag der Anmeldung: **23.06.2004**
(21) Anmeldenummer: 02406126.9
(22) Anmeldetag: 20.12.2002
(51) Int. Cl.: B32B 27/32, B65D 85/10, B65D 71/00

(54) **Polypropylen-Umhüllungs-Verpackungsfolie mit lokalen Siegeleigenschaften**

(71) Anmelder: Alcan Technology & Management Ltd., 8212 Neuhausen am Rheinfall (CH)
(72) Erfinder: Dixon, John, Redland, Bristol BS6 6RJ (GB)

(57) **Zusammenfassung**

Bei einer Verpackungsfolie (12) auf der Basis eines Filmes oder eines Laminates aus zwei über einen Permanentkleber miteinander verbundenen Filmen aus heisssiegelfähigem oder nicht heisssiegelfähigem orientierten Polypropylen (OPP) zum Verpacken durch Umwickeln und Siegeln gegen sich selbst von Packungen mit einer Umhüllung aus einem Film aus coextrudiertem orientierten Polypropylen (OPP) ist bei heisssiegelfähigen Filmen auf der als Innenseite (20) vorgesehenen Seite des Filmes oder des Laminates der Verpackungsfolie (12) ein hitzebeständiger Lack (24) in der Form eines Beschichtungsmusters lokal im Einflussbereich der vorgesehenen Siegelungen angeordnet. Bei nicht heisssiegelfähigen Filmen ist auf dem Film oder dem Laminat der Verpackungsfolie (12) ein Heisssiegellack (22) in der Form eines Beschichtungsmusters lokal an den für die Siegelungen vorgesehenen Stellen angeordnet. Die Verpackungsfolie (12) eignet sich zur Herstellung einer aus mehreren gestapelten Packungseinheiten gebildeten Packung (10), wie z.B. einer mehrere Zigarettenpackungseinheiten umfassenden Packung.

## Beschreibung

Die Erfindung betrifft eine Verpackungsfolie auf der Basis eines Filmes oder eines Laminates aus zwei über einen Permanentkleber miteinander verbundenen Filmen aus heisssiegelfähigem oder nicht heisssiegelfähigem orientierten Polypropylen (OPP) zum Verpacken durch Umwickeln und Siegeln gegen sich selbst von Packungen mit einer Umhüllung aus einem Film aus coextrudiertem orientierten Polypropylen (OPP).

Herkömmliche Zigarettenpackungseinheiten in der Form von Schachteln oder Weichpackungen mit je zwanzig Zigaretten werden bei gewissen Verkaufsstellen wie z.B. Duty Free-Läden und Cash and Carry-Einkaufszentren in Packungen zu 200 Zigaretten bzw. 10 Zigarettenpackungseinheiten angeboten. Das üblicherweise verwendete Verpackungsmaterial ist Karton oder Papier. Im letztgenannten Fall werden zehn Zigarettenschachteln als Einheit in einer Abpackmaschine wie ein Paket mit Papier umwickelt und die Papierverpackung wird mit Klebstoff fixiert. Diese Art von Packung ist allgemein unter dem Begriff "bundle pack" bekannt.

Zur Bildung dieser Packungen wurden auch schon Kunststofffilme eingesetzt. Eine für diesen Zweck bekannte Verpackungsfolie ist ein mit einem Acrylat bzw. Acrylsäureester (AE) oder mit Polyvinylidenchlorid (PVdC) beschichteter Film aus orientiertem Polypropylen (OPP). Zur Herstellung der erforderlichen Aussenseite zu Aussenseite-, Aussenseite zu Innenseite- und Innenseite zu Innenseite-Siegelungen sind schon mit AE und PVdC beschichtete OPP-Filme eingesetzt worden. Diese Filme haben bei den mit Heizelementen ausgerüsteten Verpackungsmaschinen im Vergleich zu Standard coextrudierten OPP-Filmen niedrigere Siegeltemperaturen und haben den Vorteil, dass diese Beschichtungen nicht gegen den coextrudierten Film siegeln, mit dem die einzelnen Packungseinheiten umhüllt sind. Unbeschichtetes OPP mit coextrudierten Standardoberflächen kann ebenfalls eingesetzt werden, jedoch sind höhere Heisssiegeltemperaturen erforderlich, was zu einem Schrumpfen der Folie auf der Verpackungsmaschine führen kann. Spezielle Harze mit niedrigen Siegeltemperaturen können ebenfalls für eine Coextrusion zur Bildung unbeschichteter OPP-Filme eingesetzt werden. Diese Spezialharze sind jedoch teuer und können zu anderen Problemen wie z.B. zu einer schlechten Bedruckbarkeit führen. Zudem besteht die Gefahr, dass der zur Verpackung verwendete OPP-Film gegen den coextrudierten OPP-Film der Umhüllung der einzelnen Zigarettenpackungseinheiten siegelt und diese beschädigt.

Der Erfindung liegt die Aufgabe zugrunde, eine Verpackungsfolie der eingangs genannten Art derart auszugestalten, dass sie zum Verpacken von Packungen mit einer Umhüllung aus einem coextrudierten OPP-Film geeignet ist, ohne dass die Gefahr einer Siegelung gegen die Umhüllung besteht.

Zur erfindungsgemässen Lösung der Aufgabe führt, dass
- bei heisssiegelfähigen Filmen auf der als Innenseite vorgesehenen Seite des Filmes oder des Laminates der Verpackungsfolie ein hitzebeständiger Lack in der Form eines Beschichtungsmusters lokal im Einflussbereich der vorgesehenen Siegelungen angeordnet ist, oder
- bei nicht heisssiegelfähigen Filmen auf dem Film oder dem Laminat der Verpackungsfolie ein Heisssiegellack in der Form eines Beschichtungsmusters lokal an den für die Siegelungen vorgesehenen Stellen angeordnet ist.

Als Heisssiegellack für das Beschichtungsmuster eignen sich beispielsweise Acrylate bzw. Acrylsäureester (AE), Polyvinylidenchlorid (PVdC) oder ein Ethylen-Vinylacetat (EVA)-Copolymer. Die verwendeten Heisssiegellacke sind untereinander heisssiegelfähig.

Unter dem Begriff "OPP-Film" werden hier sowohl reine OPP-Filme als auch OPP-Filme mit coextrudierten Oberflächenschichten aus Co- und Terpolymeren des Propylens (P) mit z.B. Ethylen (E) und/oder Vinylacetat (VA) und anderen Monomeren verstanden. OPP-Filme mit derartigen coextrudierten Oberflächenschichten weisen gegenüber reinen OPP-Filmen niedrigere Heisssiegeltemperaturen auf. OPP-Filme ohne coextrudierte Oberflächenschichten werden generell als nicht siegelfähig bezeichnet, wenn sie bei den erforderlichen Temperaturen bereits schrumpfen. OPP-Filme werden als siegelfähig bezeichnet, wenn sie bei den erforderlichen Temperaturen nicht schrumpfen.

Bei Verpackungsfolien mit einem OPP-Film kann dieser durchsichtig oder opak sein. Der OPP-Film kann auch auf wenigstens einer Seite bedruckt sein.

Bei Verpackungsfolien mit einem OPP-Laminat kann der zur Bildung der Aussenseite vorgesehene äussere Film des Laminates durchsichtig und auf der zu laminierenden Seite bedruckt sein. Der zur Bildung der Innenseite vorgesehene innere Film des Laminates kann durchsichtig, opak oder auf der zu laminierenden Seite metallisiert sein. Zur Herstellung der bei dieser Art Verpackung erforderlichen Aussenseite zu Aussenseite-, Aussenseite zu Innenseite- und Innenseite zu Innenseite-Heisssiegelungen ist es im allgemeinen erforderlich, dass sowohl der äussere als auch der innere Film ein coextrudierter Film ist. In diesem Fall sind die im Einflussbereich von Siegelungen liegenden Zonen mit dem hitzeresistenten Lack beschichtet. Als hitzeresistenter Lack eignet sich z.B. ein Nitrozelluloselack. Ist der innere Film der Verpackungsfolie ein nicht siegelfähiger OPP-Film, kann die Beschichtung mit einem hitzeresistenten Lack entfallen.

Bevorzugt ist das Beschichtungsmuster aus Heisssiegellack als Registerdruck auf die Verpackungsfolie aufgetragen.

Das bevorzugte Verwendungsgebiet der erfindungsgemässen Verpackungsfolie ist die Herstellung einer aus mehreren gestapelten Packungseinheiten gebildeten Packung, insbesondere die Herstellung von mehrere Zigarettenpackungseinheiten umfassenden Packungen.

Weitere Vorteile, Merkmale und Einzelheiten der erfindungsgemässen Verpackungsfolie ergeben sich aus der nachfolgenden Beschreibung bevorzugter Ausführungsbeispiele sowie anhand der Zeichnung; diese zeigt schematisch in
- Fig. 1 die Schrägsicht auf eine Zigaretten-Grosspackung;
- Fig. 2 die Aussenseite eines Teils eines Verpackungsfolienzuschnitts zur Herstellung der Zigaretten-Grosspackung von Fig. 1;
- Fig. 3 die Innenseite des Teils des Verpackungsfolienzuschnitts von Fig. 2;

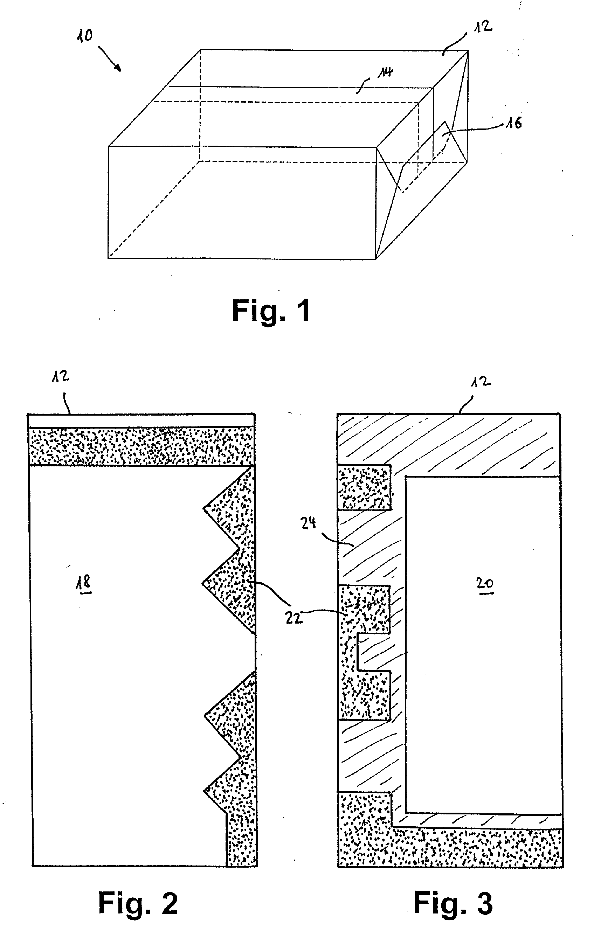

Eine in Fig. 1 dargestellte Packung 10 mit mehreren Zigarettenpackungseinheiten besteht aus einer gegebenenfalls bedruckten Verpackungsfolie 12 aus einem OPP-Film oder einem Laminat aus zwei über einen Permanentkleber miteinander verbundenen OPP-Filmen. Die Packung 10 ergibt sich aus einer in einem Randbereich 14 überlappenden Wicklung eines in der Zeichnung nicht gezeigten Stapels aus einzelnen Zigarettenpackungseinheiten mit der Verpackungsfolie 12 und überlappendes Einschlagen der Verpackungsfolie 12 an zwei einander gegenüberliegenden Seiten 16 des Stapels aus einzelnen Zigarettenpackungseinheiten. In den Überlappungszonen im Randbereich 14 und an den Seiten 16 der Packung 10 ist die Verpackungsfolie 12 gegen sich selbst heissgesiegelt.

Wie in den Fig. 2 und 3 gezeigt, ist eine aus nicht siegelfähigen Filmen aufgebaute Verpackungsfolie 12 auf der Aussenseite 18 und auf der Innenseite 20 an den zur Siegelung vorgesehenen Stellen in der Form eines Musters mit Heisssiegellack 22 beschichtet. Bei einer aus siegelfähigen Filmen aufgebauten Verpackungsfolie 12 sind die im Einflussbereich der Siegelungen liegenden Zonen an der Innenseite 20 der Verpackungsfolie 12 in der Form eines Musters mit einem hitzebeständigen Lack 24 beschichtet. Damit wird verhindert, dass die Verpackungsfolie 12 gegen den darunter liegenden coextrudierten OPP-Film der einzelnen Zigarettenpackungseinheiten siegeln kann.

## Patentansprüche

1. Verpackungsfolie auf der Basis eines Filmes oder eines Laminates aus zwei über einen Permanentkleber miteinander verbundenen Filmen aus heisssiegelfähigem oder nicht heisssiegelfähigem orientierten Polypropylen (OPP) zum Verpacken durch Umwickeln und Siegeln gegen sich selbst von Packungen mit einer Umhüllung aus einem Film aus coextrudiertem orientierten Polypropylen (OPP),
**dadurch gekennzeichnet, dass**
- bei heisssiegelfähigen Filmen auf der als Innenseite (20) vorgesehenen Seite des Filmes oder des Laminates der Verpackungsfolie (12) ein hitzebeständiger Lack (24) in der Form eines Beschichtungsmusters lokal im Einflussbereich der vorgesehenen Siegelungen angeordnet ist, oder
- bei nicht heisssiegelfähigen Filmen auf dem Film oder dem Laminat der Verpackungsfolie (12) ein Heisssiegellack (22) in der Form eines Beschichtungsmusters lokal an den für die Siegelungen vorgesehenen Stellen angeordnet ist.

2. Verpackungsfolie nach Anspruch 1 mit einem OPP-Film, **dadurch gekennzeichnet, dass** der OPP-Film durchsichtig oder opak ist.

3. Verpackungsfolie nach Anspruch 2, **dadurch gekennzeichnet, dass** der OPP-Film auf wenigstens einer Seite bedruckt ist.

4. Verpackungsfolie nach Anspruch 1 mit einem OPP-Laminat, **dadurch gekennzeichnet, dass** der zur Bildung der Aussenseite vorgesehene Film des Laminates durchsichtig und auf der zu laminierenden Seite bedruckt und der zur Bildung der Innenseite vorgesehene Film des Laminates durchsichtig, opak oder auf der zu laminierenden Seite metallisiert ist.

5. Verpackungsfolie nach einem der Ansprüche 1 bis 4, **dadurch gekennzeichnet, dass** das Beschichtungsmuster aus dem Heisssiegellack (22) oder aus dem hitzebeständigen Lack (24) als Registerdruck auf die Verpackungsfolie (12) aufgetragen ist.

6. Verwendung einer Verpackungsfolie (12) nach einem der Ansprüche 1 bis 5 zur Herstellung einer aus mehreren gestapelten Packungseinheiten gebildeten Packung (10).

7. Verwendung nach Anspruch 6 zur Herstellung von mehrere Zigarettenpackungseinheiten umfassenden Packungen.
